# EUROPÄISCHE PATENTSCHRIFT

(11) **EP 4 306 928 B1**
(45) Veröffentlichungstag und Bekanntmachung des Hinweises auf die Patenterteilung: **11.11.2026**
(21) Anmeldenummer: 22185110.8
(22) Anmeldetag: 15.07.2022
(51) Int. Cl.: G01N 15/02

(54) **DYNAMISCHES 3D-LICHTSTREUUNGS-PARTIKELGRÖSSENVERTEILUNGSMESSGERÄT UND VERFAHREN ZUM BESTIMMEN EINER PARTIKELGRÖSSENVERTEILUNG**
DYNAMIC 3D LIGHT SCATTERING PARTICLE SIZE DISTRIBUTION MEASURING APPARATUS AND METHOD OF DETERMINING PARTICLE SIZE DISTRIBUTION
APPAREIL DE MESURE DE LA DISTRIBUTION GRANULOMÉTRIQUE DE LA DIFFUSION DYNAMIQUE DE LA LUMIÈRE EN 3D ET PROCÉDÉ DE DÉTERMINATION D'UNE DISTRIBUTION GRANULOMÉTRIQUE

(43) Veröffentlichungstag der Anmeldung: 17.01.2024
(73) Patentinhaber: Sympatec GmbH, 38678 Clausthal-Zellerfeld (DE)
(72) Erfinder: Werner, Daniel, 38642 Goslar (DE)
(74) Vertreter: Gramm, Lins & Partner Patent- und Rechtsanwälte PartGmbB

(56) Entgegenhaltungen:
- WO-A1-2021/155361
- US-A1- 2014 132 943

## Beschreibung

Die Erfindung betrifft ein dynamisches 3D-Lichtstreuungs-Partikelgrößenverteilungsmessgerät. Gemäß einem zweiten Aspekt betrifft die Erfindung ein Verfahren zum Bestimmen einer Partikelgrößenverteilung einer Probe.

Die dynamische 3D-Lichtstreuungs-Partikelgrößenverteilungsmessung beruht auf der Streuung von kohärentem Laserlicht an den Partikeln der Probe. Die Partikel zeigen die Brownsche Molekularbewegung, die mit zunehmender Partikelgröße abnimmt. Die Intensität des gestreuten Laserlichts schwankt aufgrund der Bewegung der Partikel. Je kleiner die Partikel sind, desto mehr schwankt die Intensität. Die Autokorrelationsfunktion der Intensität fällt umso schneller ab, je kleiner die Partikel sind.

Mit zunehmender Partikelkonzentration kommt es jedoch zu Mehrfachstreuung, die eine erhöhte Intensitätsfluktuation des gestreuten Laserlichts bewirkt. Es wird daher eine zu kleine mittlere Partikelgröße gemessen.

Um dieses Problem zu vermeiden, wird die Partikelgrößenverteilung von Proben mit einer hohen Partikelkonzentration dadurch gemessen, dass die Probe zunächst verdünnt wird. Danach wird die Partikelgrößenverteilung an der verdünnten Probe gemessen. Damit die so bemessene Partikelgrößenverteilung der tatsächlichen Partikelgrößenverteilung entspricht, muss sichergestellt sein, dass die zum Verdünnen verwendete Flüssigkeit die Partikelgrößenverteilung nicht verändert. Dies sicherzustellen hat sich als aufwendig und problematisch herausgestellt.

Es ist bekannt, den Laserstrahl in zwei Teilstrahlen aufzuspalten und in einem Überlagerungsbereich der Probe zu überlagern. Es werden die Intensitätsschwankungen das Streulicht beider Teilstrahlen aus dem Überlagerungsbereich unter einem Winkel von größer 0° bis kleiner 160° erfasst und die Kreuzkorrelationsfunktion berechnet. Aus dem Abfall der Kreuzkorrelationsfunktion wird dann die Partikelgrößenverteilung berechnet. Da das Auftreten von Mehrfachstreuung ein rein stochastischer Prozess ist, wird deren Einfluss durch das Berechnen der Kreuzkorrelationsfunktion eliminiert.

Nachteilig an diesem Vorgehen ist, dass durch das Aufspalten des Laserstrahls und die Schwächung der Teilstrahlen in der Probe nur ein geringer Teil der eingestrahlten Lichtintensität für die Messung der Intensität des Streulichts zur Verfügung steht. Bei der Verwendung von bekannten Laserlichtquellen kommt es daher zu einem vergleichsweise schlechten Signal-zu-Rausch-Verhältnis. Als Signal ist hier die maximale Kreuzkorrelationsamplitude gemeint. Im bisherigen 3D-Kreuzkorrelationsverfahren beträgt sie theoretisch nur 25 % (praktisch ca. 20 %) von möglichen 100 %, also nur ein Viertel des Autokorrelationssignals. Je trüber die gemessene Probe, desto geringer ist das zu messende Korrelationssignal (Korrelationsamplitude) durch erhöhte Anteile von mehrfach gestreutem Licht.

Der Grund der geringen Kreuzkorrelationsamplitude von 25 % sind Querstreuungen ausgehend von einem Laserstrahl in den anderen Detektor und umgekehrt. Die zwei Laserstrahlen und Detektoren seien als A und B bezeichnet. Dann können, bei optimaler Justage, nur Streulichtanteile von Laser A nach Detektor A und Laser B nach Detektor B miteinander korrelieren. Die Streuvektoren A-A und B-B sind identisch. Es gelangt aber auch Streulicht von Laser A nach Detektor B und von Laser B nach Detektor A. Die Streuvektoren A-B sowie B-A sind aber nicht gleich und damit nicht korrelierbar. Diese Querstreuung bzw. dieses Störstreulicht wirkt auf das Kreuzkorrelationssignal wie mehrfachgestreutes Licht. Um die maximale Signalstärke, vergleichbar zur Autokorrelation, zu erlangen, müssten die beiden Streulichtmessungen (A-A und B-B) voneinander getrennt werden.

Aus der US 2014/0132943 A1 ist ein Verfahren bekannt, bei dem zwei Lichtstrahlen zueinander orthogonaler Polarisationen auf einen Bereich innerhalb der Probe fokussiert werden. Das unter 180° zurückreflektierte Licht wird im jeweils gleichen Strahlengang zurückgeleitet und auf einem Fotodetektor überlagert, sodass ein Interferenzmuster entsteht. Aus dem Interferenzmuster wird durch Autokorrelation die Partikelgrößenverteilung bestimmt. Nachteilig an einem solchen Verfahren ist, dass - wie oben beschrieben - nicht nur das unter 180° zurückreflektierte Licht der jeweiligen Polarisation zurückgeleitet wird, sondern auch das Licht der jeweils anderen Polarisation, dass unter dem entsprechenden Winkel reflektiert wird. Das führt zu einer systematischen Messunsicherheit bei Suspensionen, die eine hohe Partikelkonzentration aufweisen.

Aus der WO 2021/155 361 A1 ist ein Verfahren bekannt, bei dem aus einem Lichtstrahl zwei Lichtstrahlen orthogonaler Polarisationen erzeugt werden, die einander überlagert werden. Diese werden mittels eines Mikroskops auf die zu untersuchende Probe geleitet und das reflektierte Licht auf einem Kamerachip zu Interferenz gebracht.

Der Erfindung liegt die Aufgabe zugrunde, die dynamische 3D-Lichtstreuungs-Partikelgrößenverteilungsmessung zu verbessern.

Die Erfindung löst das Problem durch ein dynamisches 3D-Lichtstreuungs-Partikelgrößenverteilungsmessgerät mit den Merkmalen von Anspruch 1.

Gemäß einem zweiten Aspekt löst die Erfindung das Problem durch ein Verfahren mit den Merkmalen von Anspruch 8.

Vorteilhaft an der erfindungsgemäßen Lösung ist, dass der Effekt der Mehrfachstreuung zumeist effektiver unterdrückt werden kann als bei bekannten Verfahren. Das erhöht in der Regel die Reproduzierbarkeit der Messergebnisse. In anderen Worten streuen die Messergebnisse beim erfindungsgemäßen Verfahren zumeist weniger als bei Verfahren nach dem Stand der Technik.

Vorteilhaft ist zudem, dass meistens ein verbessertes Signal-zu-Rausch-Verhältnis im Vergleich zu bekannten Verfahren erreichbar ist. Das kann genutzt werden, um die Messzeit zu verkürzen und/oder eine geringere Messunsicherheit zu erreichen.

Günstig ist zudem, dass mit dem erfindungsgemäßen Verfahren Messungen an Proben mit einer Partikelkonzentration möglich sind, die bei bekannten Verfahren eine Verdünnung erfordern, um belastbare Messergebnisse zu erhalten. Das führt zu einer signifikanten Vereinfachung des Messverfahrens bei gleichzeitiger Verminderung der Messunsicherheit.

Im Rahmen der vorliegenden Beschreibung wird unter dem Merkmal, dass rückgestreutes Licht erfasst wird, verstanden, dass der Rückstreuwinkel insbesondere größer als 165° ist. Vorzugsweise ist der Rückstreuwinkel größer als 170°, besonders bevorzugt größer als 173°. Der Rückstreuwinkel Θ ist der Winkel zwischen dem Vektor des nicht gestreuten Lichts des s-Laserstrahls und dem Vektor des s-Rückstreu-Lichtstrahls. Der Rückstreuwinkel Θ kann damit theoretisch maximal 180° betragen. Die Erfassung von rückwärtig-gestreutem Licht begünstigt die Unterdrückung von Mehrfachstreuung, nämlich durch kurze optische Wege in der Probe, und die Detektion von feinen Partikeln im Vergleich zur Erfassung von vorwärts-gerichtetem Streulicht, das beispielsweise unter einem Winkel bis 90° gemessen wird.

Unter der Laserlichtquelle wird insbesondere eine Quelle kohärenten Lichts verstanden, dessen Kohärenzlänge zumindest der Länge des Lichtpfads von der Lichtquelle zu der Probe, insbesondere zumindest das 1,5-fache dieser Länge, entspricht. Wenn sich die beiden Längen der Lichtpfade für die beiden Lichtintensitätsdetektoren unterscheiden, wird die größere Länge verwendet.

Unter der Probenaufnahme wird insbesondere eine Vorrichtung verstanden, die ausgebildet ist zum reversiblen Aufnehmen eines Behältnisses für eine zu vermessenden Probe.

Die Polarisationsangaben, also dass die Polarisation senkrecht oder parallel ist, bezieht sich auf ein beliebig vorgebbares, aber für beide Laserstrahlen gleiches Koordinatensystem. In anderen Worten ist es entscheidend, dass die beiden Laserstrahlen orthogonal zueinander polarisiert sind. Maßgeblich ist lediglich, dass die beiden Polarisationen senkrecht zueinander verlaufen. Die senkrechte Polarisation könnte auch vertikale oder erste Polarisation genannt werden. Die parallele Polarisation könnte auch waagerechte oder zweite Polarisation genannt werden.

Unter dem s-Rückstreu-Lichtstrahl wird ein Strahl aus rückgestreutem Licht des s-Lichtstrahls verstanden, der selber eine s-Polarisierung haben kann, das ist aber nicht notwendig. Maßgeblich ist lediglich, dass das entsprechende Licht durch Streuung aus Licht des s-Lichtstrahls entstanden ist. Da es sich hier in der Regel um elastische Streuung an Partikeln handelt, entspricht die Polarisation des gestreuten Lichts dem des einfallenden Lichtstrahls. Nur bei stark anisotropen Partikeln kann bei dem gestreuten Licht eine Depolarisation, Drehung der Polarisation, entstehen.

Die Auswerteeinheit ist eine Vorrichtung, die automatisch die Kreuzkorrelationsfunktion aus den gemessenen Lichtintensitäten durchführt. Die Auswerteeinheit kann daher auch als Korrelator bezeichnet werden.

Unter dem Fokusbereich wird der Bereich verstanden, in dem sich der s-Laserstrahl und der p-Laserstrahl überlagern. Es kann sich dabei um den Fokus im Sinne der Strahlenoptik handeln, also um den Bereich, in dem die gedachten Lichtstrahlen durch die Linse gebündelt werden, das ist aber nicht notwendig. Es ist möglich, dass der Fokusbereich und der Fokus einander überlappen oder voneinander disjunkt sind. Maßgeblich ist lediglich, dass das Licht, das zu den Lichtintensitätsdetektoren gelangt, aus dem Bereich stammt, in dem die beiden Laserstrahlen einander überlagern. Idealerweise sollten die Fokusbereiche, besser die Strahltaillen der beiden Laserstrahlen, einander überlappen und ein gemeinsames Streuvolumen bilden. Streulichtsignale, die von Partikeln innerhalb des gemeinsamen Überlappungsbereiches (Volumens) ausgehen, sind korrelierbar und tragen zur Berechnung der Partikelgrößenverteilung bei.

Unter der Partikelgrößenverteilung wird insbesondere jede Funktion verstanden, aus der ableitbar ist, welchen Anteil (an Anzahl, Volumen oder Masse) Partikel innerhalb eines bestimmten Partikelgrößenintervalls in Bezug auf alle Partikel haben.

Das Berechnen der Partikelgrößenverteilung aus der zeitaufgelösten p-Lichtintensität und der zeitaufgelösten s-Lichtintensität umfasst ein Berechnen der Kreuzkorrelation der beiden Lichtintensitäten.

Gemäß einer bevorzugten Ausführungsform sind der s-Lichtintensitätsdetektor und der p-Lichtintensitätsdetektor so angeordnet, dass die Rückstreu-Lichtstrahlen aus dem Fokusbereich durch die Linse zu den Lichtintensitätsdetektoren verlaufen. Dadurch ist sichergestellt, dass das von den Lichtintensitätsdetektoren erfasste Licht stets aus dem Fokusbereich stammt. Das erspart eine ansonsten notwendige Justage von ansonsten notwendigen optischen Bauteilen zum Zuführen der Rückstreu-Lichtstrahlen zu den Lichtintensitätsdetektoren.

Vorzugsweise beträgt der Strahlabstand zumindest 0,5 mm, insbesondere zumindest 1 mm. Günstig ist es zudem, wenn der Strahlabstand höchstens 20 mm, insbesondere höchstens 10 mm, besonders bevorzugt höchstens 7 mm, beträgt. Auf diese Weise lassen sich die Rückstreu-Lichtstrahlen vergleichsweise einfach getrennt voneinander auf die Lichtintensitätsdetektoren leiten.

Günstig ist es, wenn ein Rückstrahl-Strahlabstand des s-Rückstreu-Lichtstrahls vom p-Rückstreu-Lichtstrahl sich vom Strahlabstand um höchstens 30%, insbesondere höchstens 15%, unterscheidet.

Vorzugsweise besitzt das 3D-Lichtstreuungs-Partikelgrößenverteilungsmessgerät eine Linsen-Justagevorrichtung zum Justieren der Linse relativ zum Polarisationstrenner. Insbesondere ist die Linsen-Justagevorrichtung ausgebildet zum Verschieben der Linse in der Lichtausbreitungsrichtung, mit der der s-Laserstrahl und der p-Laserstrahl auf die Linse auftreffen.

Gemäß einer bevorzugten Ausführungsform ist die Laserlichtquelle ausgebildet zum Abgeben eines Laserstrahls mit einer Beugungsmaßzahl M², sodass M² ≤ 1,2, vorzugsweise M² < 1,15, gilt. Das ist beispielsweise dadurch erreichbar, dass die Laserlichtquelle einen Helium-Neon-Laser aufweist. Alternativ kann die Laserlichtquelle einen Diodenlaser und eine Lichtleitfaser aufweisen. In diesem Fall ist die Lichtleitfaser vorzugsweise eine Einmodenfaser. Es ist möglich, dass der Diodenlaser einen Primär-Laserstrahl abgibt, für den M² ≥ 1,2, insbesondere M² ≥ 1,1 gilt. Die Lichtleitfaser ist vorzugsweise ausgebildet zum Vermindern der Beugungsmaßzahl M², sodass für den aus der Lichtleitfaser austretenden Laserstrahl M² ≤ 1,2, vorzugsweise M² ≤ 1,15, gilt.

Vorzugsweise ist der Polarisationstrenner ein Polarisationsstrahlteiler, der eine optische Achse hat und zwei parallele, orthogonal zueinander polarisierte Laserstrahlen erzeugt, nämlich den s-Laserstrahl und den p-Laserstrahl. Ein solcher Polarisationsstrahlteiler erzeugt stets parallel zueinander verlaufende Laserstrahlen, sodass eine Justage, mit der diese Parallelität andernfalls sichergestellt werden müsste, entfällt.

Besonders günstig ist es, wenn die Laserlichtquelle unpolarisiertes oder zirkular polarisiertes Laserlicht abgibt.

Günstig ist es, wenn die Lichtleitfasern einen Lichtleitfaser-Eingang, der zum Einkoppeln des Laserstrahls zur Laserlichtquelle ausgerichtet ist, und einen Lichtleitfaser-Ausgang aufweist. Vorzugsweise besitzt das 3D-Lichtstreuungs-Partikelgrößenverteilungsmessgerät eine Lichtleitfaser-Justagevorrichtung zum Justieren des Lichtleitfaser-Ausgangs relativ zum Polarisationstrenner. Auf diese Weise kann der von der Laserlichtquelle abgegebene Laserstrahl präzise auf den Polarisationstrenner ausgerichtet werden.

Beispielsweise ist der Polarisationstrenner fest auf einem Träger montiert. **In** diesem Fall ist die Lichtleitfaser-Justagevorrichtung zum Justieren des Lichtleitfaser-Ausgangs relativ zu diesem Träger ausgebildet.

Gemäß einer bevorzugten Ausführungsform ist die Probenaufnahme ausgebildet zum Aufnehmen einer Probe mit einem Durchmesser von zumindest 7 mm, insbesondere zumindest 9 mm. Insbesondere ist die Probenaufnahme ausgebildet zum Aufnehmen einer Küvette mit einem Durchmesser von zumindest 7 mm, insbesondere zumindest 9 mm. Vorzugsweise ist der Durchmesser der Probe, insbesondere der Küvette, kleiner als 50 mm. Es ist ein Vorteil der Erfindung, dass das Licht in der Probe lediglich einen kurzen Weg zurücklegen muss, sodass der Verlust an Lichtintensität klein und das Signal-zu-Rausch-Verhältnis entsprechend größer ist.

Günstig ist es, wenn in der Probenaufnahme ein Probenbehälter angeordnet ist. Vorzugsweise ist die Probenaufnahme so angeordnet, dass der Fokusbereich einen Abstand von höchstens 1 mm von einer Innenseite des Probenbehälters der Probe hat. **In** diesem Fall muss das Licht lediglich eine kurze Strecke in der Probe zurücklegen, was zu einem vergleichsweise geringen Verlust an Lichtintensität und geringes mehrfachgestreutes Licht führt.

Im Probenbehälter ist vorzugsweise eine Suspension vorhanden, deren Opazität zumindest einer Polystyrol-Latex-Suspension mit 0,1 Volumenprozent, insbesondere zumindest 0,2 Volumenprozent, an 100 nm Polystyrol-Latex-Partikeln entspricht.

Im Folgenden wird die Erfindung anhand der beigefügten Zeichnungen näher erläutert. Dabei zeigt
- Figur 1: eine schematische Ansicht eines erfindungsgemäßen 3D-Lichtstreuungs-Partikelgrößenverteilungsmessgeräts,
- Figur 2: in Teilfigur 2a die Messergebnisse an einer Probe mit einem Verfahren nach dem Stand der Technik und in Teilfigur 2b die Messergebnisse an der gleichen Probe mit einem erfindungsgemäßen Verfahren und
- Figur 3: in der Teilfigur 3a die Kreuzkorrelationskurven von Propofol (Konzentration: 10 mg/ml) einerseits gemessen unverdünnt mit dem erfindungsgemäßen Verfahren und andererseits gemessen mit einem Verfahren nach dem Stand der Technik nach einer Verdünnung von 1:100 und in der Teilfigur 3b die Kreuzkorrelationskurven bei einer Messung an 100 nm Polystyrol-Latex-Partikeln (Konzentration: 1 Vol.-%) einerseits gemessen mit dem erfindungsgemäßen Verfahren und andererseits gemessen mit einem Verfahren nach dem Stand der Technik.

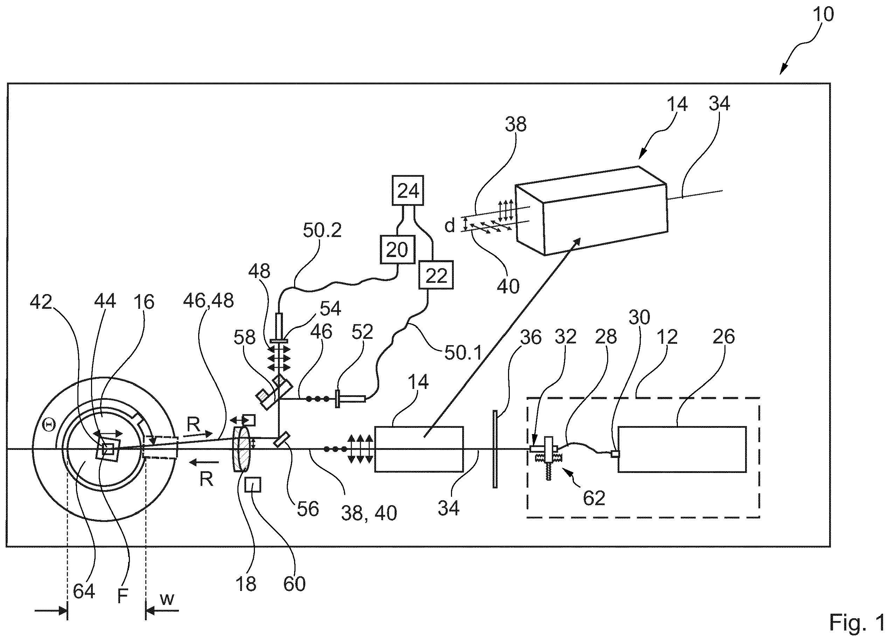

Figur 1 zeigt eine schematische Ansicht eines erfindungsgemäßen 3D-Lichtstreuungs-Partikelgrößenverteilungsmessgeräts 10 mit einer Laserlichtquelle 12, einem Polarisationstrenner 14, einer Probenaufnahme 16, einer Linse 18, einem p-Lichtintensitätsdetektor 20, einem s-Lichtintensitätsdetektor 22 und einer Auswerteeinheit 24, die mit den Lichtintensitätsdetektoren 20, 22 verbunden ist.

Die Laserlichtquelle 12 umfasst im vorliegenden Fall einen Laser 26 und eine Lichtleitfaser 28, die mit ihrem Lichtleitfaser-Eingang 30 mit dem Laser 26 gekoppelt ist. Aus einem Lichtleitfaser-Ausgang 32 wird ein Laserstrahl 34 abgegeben.

Der Laserstrahl 34 fällt auf den Polarisationstrenner 14. Es ist möglich, nicht aber notwendig, dass der Laserstrahl 34 vor dem Auftreffen auf den Polarisationstrenner 14 einer Vorrichtung zur Laserintensitätseinstellung 36 durchläuft. Der Polarisationstrenner erzeugt einen s-Laserstrahl 38 und einen p-Laserstrahl 40, der parallel zum s-Laserstrahl 38 verläuft und einen Strahlabstand d von diesem hat. Der s-Laserstrahl 38 weist eine s-Polarisierung auf, der p-Laserstrahl eine p-Polarisierung.

Der s-Laserstrahl 38 und der p-Laserstrahl 40 werden von der Linse 18, die als Achromat ausgebildet sein kann, nicht aber ausgebildet sein muss, auf einen gemeinsamen Fokusbereich F innerhalb der Probenaufnahme 16 gebündelt. In der Probenaufnahme 16 ist ein Probenbehälter 42, beispielsweise in Form einer Küvette, angeordnet, die eine zu vermessende Probe 44 enthält.

Die Probe 44 enthält eine Vielzahl an Partikeln, sodass das Licht des s-Laserstrahls 38 Streulicht erzeugt, das als ein s-Rückstreu-Lichtstrahl 46 unter einem Rückstreuwinkel Θ zum s-Laserstrahl verläuft und erneut auf die Linse 18 trifft. Im vorliegenden Fall gilt Θ = 176°±2°. Das Licht des p-Laserstrahls 40 erzeugt Streulicht, das als p-Rückstreu-Lichtstrahl 48 unter dem gleichen Rückstreuwinkel zum p-Laserstrahl 40 verläuft und auf die Linse 18 trifft.

Es ist möglich, nicht aber notwendig, dass der s-Rückstreu-Lichtstrahl 46 mittels einer ersten Lichtleitfaser 50.1 zum s-Lichtintensitätsdetektor 22 geleitet wird. Es ist zudem möglich, nicht aber notwendig, dass der p-Rückstreu-Lichtstrahl 48 mittels einer zweiten Lichtleitfaser 50.2 zum p-Lichtintensitätsdetektor 20 geleitet wird.

Der p-Lichtintensitätsdetektor 20 umfasst einen p-Polarisationsfilter 54, der lediglich p-polarisiertes Licht durchlässt. Entsprechend umfasst der s-Lichtintensitätsdetektor 22 einen s-Polarisationsfilter 52, der lediglich s-polarisiertes Licht durchlässt.

Es ist möglich, nicht aber notwendig, dass der s-Rückstreu-Lichtstrahl 46 und der p-Rückstreu-Lichtstrahl 48 in Lichtausbreitungsrichtung R hinter der Linse 18 von einem Umlenkspiegel 56 auf einen Justage-Spiegel 58 gespiegelt werden, der zumindest einen der Rückstreu-Laserstrahlen umlenkt.

Mittels einer Linsen-Justagevorrichtung 60 kann die Linse 18 in der Lichtausbreitungsrichtung R verschoben werden. Mittels einer Lichtleitfaser-Justagevorrichtung 62 kann der Lichtleitfaser-Ausgang 32 so bewegt werden, dass der Laserstrahl 34 den Polarisationstrenner 14 zentral trifft.

Die Probenaufnahme 16 hat eine lichte Weite w von beispielsweise mehr als w = 10 mm, sodass der Probenbehälter 42 eine Standard-Küvette sein kann. Günstig, nicht aber notwendig ist es, wenn die Probenaufnahme 16 ein Wasserbad 64 aufweist, sodass der Probenbehälter 42 auf eine vorgebbare Temperatur T bringbar ist. Vorzugsweise ist 0°C < T < 100°C.

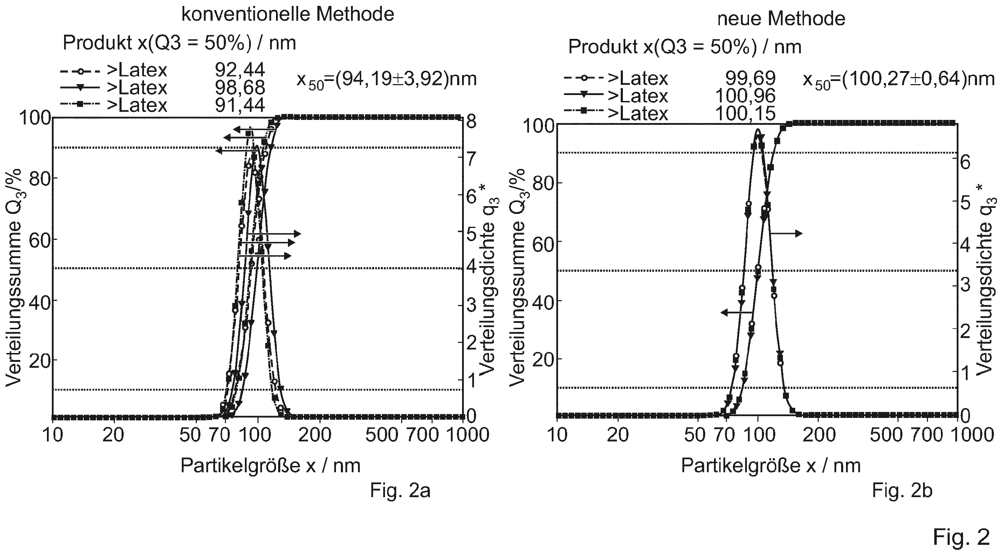

Figur 2 zeigt in Teilfigur 2a drei Messungen an der gleichen Probe aus 100 nm Polystyrol-Latex-Partikeln mit einer Volumenkonzentration von 1 %. Es ist zu erkennen, dass die drei Messungen jeweils leicht voneinander abweichende Messergebnisse liefern.

In der Teilfigur 2b sind 3 Messungen an der gleichen Probe mit einem erfindungsgemäßen 3D-Lichtstreuungs-Partikelgrößenverteilungsmessgerät 10 gezeigt. Es ist zu erkennen, dass sich die gemessenen Partikelgrößenverteilungen in Form der Partikelgrößenverteilungsdichte q kaum voneinander unterscheiden lassen. In anderen Worten ergibt sich eine deutlich verminderte Messunsicherheit. Die relative Standardabweichung beträgt bei dem Verfahren nach dem Stand der Technik 4,17%, beim erfindungsgemäßen Verfahren 0,64%.

Der hydrodynamische Median-Durchmesser x₅₀ wurde nach dem erfindungsgemäßen Verfahren zu (100,27 ± 0,64) nm gemessen und mit dem Verfahren nach dem Stand der Technik zu (94,19 ± 3,92) nm. Es ist daran zu erkennen, dass die Mehrfachstreuung zu dem zu erwartenden Effekt geführt hat, dass beim Stand der Technik ein zu kleiner Wert ermittelt wird, da es sich bei der Probe um eine standardisierte Probe mit einem spezifizierten hydrodynamischen Durchmesser von (97 - 103) nm handelt.

Die Messzeit für die im rechten Teilbild 2b gezeigten Ergebnisse war 41 Sekunden, die für die im linken Teilbild 2a gezeigten Ergebnisse 398 Sekunden. Die Messdauer ist somit beim erfindungsgemäßen Verfahren 10mal schneller bei gleichzeitig deutlich erhöhter Wiederholgenauigkeit der Messergebnisse.

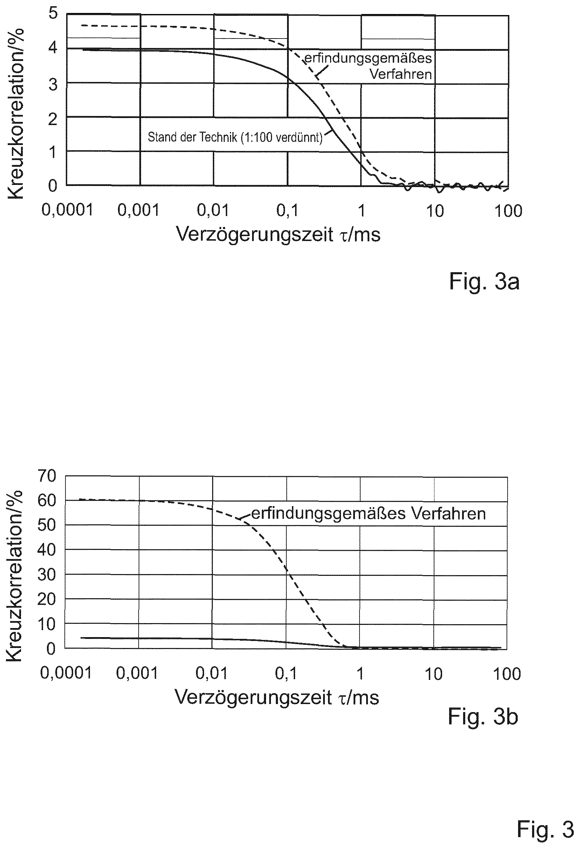

Figur 3a zeigt die gemessenen Kreuzkorrelationskurven von Propofol mit einer Konzentration von 10 mg/ml. Die durchgezogene Linie zeigt die Kreuzkorrelationskurve in Abhängigkeit von der Verzögerungszeit τ, die nach einer Verdünnung von 1:100 mit einem Verfahren nach dem Stand der Technik messbar war. Die gestrichelte Linie zeigt die Kreuzkorrelationskurve bei Messung mit dem erfindungsgemäßen Verfahren ohne Verdünnung.

In der Teilfigur 3b werden die Kreuzkorrelationskurven bei Messungen an 100 nm Polystyrol-Latex-Partikeln gezeigt. Die durchgezogene Linie zeigt die Kreuzkorrelationskurve in Abhängigkeit von der Verzögerungszeit τ bei einer Messung mit einem Verfahren nach dem Stand der Technik. Die gestrichelte Linie zeigt die Kreuzkorrelationskurve bei Messung mit dem erfindungsgemäßen Verfahren. Es ist zu erkennen, dass diese ungefähr um den Faktor 15 größer ist als bei einem Verfahren nach dem Stand der Technik. Hieraus resultieren ein deutlich höheres Signal-Rausch-Verhältnis und damit eine geringere Messzeit bei geringerer Messunsicherheit.

### Bezugszeichenliste

| | | | |
|---|---|---|---|
| 10 | 3D-Lichtstreuungs-Partikelgrößenverteilungsmessgerät | 62 | Lichtleitfaser-Justagevorrichtung |
| 12 | Laserlichtquelle | Θ | Rückstreuwinkel |
| 14 | Polarisationstrenner | d | Strahlabstand |
| 16 | Probenaufnahme | F | Fokusbereich |
| 18 | Linse | M² | Beugungsmaßzahl |
| | | q | Partikelgrößenverteilungsdichte |
| 20 | p-Lichtintensitätsdetektor | T | Temperatur |
| 22 | s-Lichtintensitätsdetektor | x₅₀ | hydrodynamischer Median-Durchmesser |
| 24 | Auswerteeinheit | | |
| 26 | Laser | w | Weite |
| 28 | Lichtleitfaser | | |
| 30 | Lichtleitfaser-Eingang | | |
| 32 | Lichtleitfaser-Ausgang | | |
| 34 | Laserstrahl | | |
| 36 | Vorrichtung zur Laserintensitätseinstellung | | |
| 38 | s-Laserstrahl | | |
| 40 | p-Laserstrahl | | |
| 42 | Probenbehälter, Küvette | | |
| 44 | Probe | | |
| 46 | s-Rückstreu-Lichtstrahl | | |
| 48 | p-Rückstreu-Lichtstrahl | | |
| 50 | Lichtleitfasern | | |
| 52 | s-Polarisationsfilter | | |
| 54 | p-Polarisationsfilter | | |
| 56 | Umlenkspiegel | | |
| 58 | Justage-Spiegel | | |
| 60 | Linsen-Justagevorrichtung | | |

### Bezugszeichenliste

| | | | |
|---|---|---|---|
| 10 | 3D-Lichtstreuungs-Partikelgrößenverteilungsmessgerät | 62 | Lichtleitfaser-Justagevorrichtung |
| 12 | Laserlichtquelle | Θ | Rückstreuwinkel |
| 14 | Polarisationstrenner | d | Strahlabstand |
| 16 | Probenaufnahme | F | Fokusbereich |
| 18 | Linse | M² | Beugungsmaßzahl |
| | | q | Partikelgrößenverteilungsdichte |
| 20 | p-Lichtintensitätsdetektor | T | Temperatur |
| 22 | s-Lichtintensitätsdetektor | x₅₀ | hydrodynamischer Median-Durchmesser |
| 24 | Auswerteeinheit | | |
| 26 | Laser | w | Weite |
| 28 | Lichtleitfaser | | |
| 30 | Lichtleitfaser-Eingang | | |
| 32 | Lichtleitfaser-Ausgang | | |
| 34 | Laserstrahl | | |
| 36 | Vorrichtung zur Laserintensitätseinstellung | | |
| 38 | s-Laserstrahl | | |
| 40 | p-Laserstrahl | | |
| 42 | Probenbehälter, Küvette | | |
| 44 | Probe | | |
| 46 | s-Rückstreu-Lichtstrahl | | |
| 48 | p-Rückstreu-Lichtstrahl | | |
| 50 | Lichtleitfasern | | |
| 52 | s-Polarisationsfilter | | |
| 54 | p-Polarisationsfilter | | |
| 56 | Umlenkspiegel | | |
| 58 | Justage-Spiegel | | |
| 60 | Linsen-Justagevorrichtung | | |

## Patentansprüche

1. Dynamisches 3D-Lichtstreuungs-Partikelgrößenverteilungsmessgerät (10) mit
(a) einer Laserlichtquelle (12) zum Abgeben eines Laserstrahls (34),
(b) einem Polarisationstrenner (14) zum Erzeugen
(i) eines s-Laserstrahls (38), der eine senkrechte Polarisation aufweist,
und
(ii) eines p-Laserstrahls (40), der eine parallele Polarisation aufweist, parallel zum s-Laserstrahl (38) verläuft und vom s-Laserstrahl (38) um einen von null verschiedenen Strahlabstand (d) beabstandet ist,
(c) einer Probenaufnahme (16) zum Aufnehmen einer Probe (44), deren Partikelgrößenverteilung zu messen ist,
(d) einer Linse (18), die zum Fokussieren des s-Laserstrahls (38) und des p-Laserstrahls (40) auf einen gemeinsamen Fokusbereich (F) innerhalb der Probenaufnahme (16) dient, und
(e) einer Auswerteeinheit (24), die ausgebildet ist zum automatischen Berechnen der Partikelgrößenverteilung,
**gekennzeichnet durch**
(f) einen s-Lichtintensitätsdetektor (22) zum Messen einer zeitaufgelösten s-Lichtintensität, der
(i) angeordnet ist zum Erfassen eines s-Rückstreu-Lichtstrahls (46) aus rückgestreutem Licht des s-Laserstrahls (38) aus dem Fokusbereich (F),
(ii) einen s-Polarisationsfilter (52) aufweist, der senkrecht polarisiertes Licht passieren lässt, sodass s-Messlicht entsteht, und
(iii) einen Lichtdetektor zur zeitaufgelösten Intensitätsmessung des s-Messlichts aufweist, und
(g) einem p-Lichtintensitätsdetektor (20) zum Messen einer zeitaufgelösten p-Lichtintensität, der
(i) angeordnet ist zum Erfassen eines p-Rückstreu-Lichtstrahls (48) aus rückgestreutem Licht des p-Laserstrahls (40) aus dem Fokusbereich (F),
(ii) einen p-Polarisationsfilter (54) aufweist, der parallel polarisiertes Licht passieren lässt, und
(iii) einen Lichtdetektor zur zeitaufgelösten Intensitätsmessung des p-Messlichts aufweist,
(h) wobei die Auswerteeinheit (24) ausgebildet ist zum automatischen Berechnen der Partikelgrößenverteilung durch Kreuzkorrelation der zeitaufgelösten p-Lichtintensität und der zeitaufgelösten s-Lichtintensität.

2. Dynamisches 3D-Lichtstreuungs-Partikelgrößenverteilungsmessgerät (10) nach Anspruch 1, **dadurch gekennzeichnet, dass**
der s-Lichtintensitätsdetektor (22) und der p-Lichtintensitätsdetektor (20) so angeordnet sind, dass die Rückstreu-Lichtstrahlen aus dem Fokusbereich (F) durch die Linse (18) zu den Lichtintensitätsdetektoren verlaufen.

3. Dynamisches 3D-Lichtstreuungs-Partikelgrößenverteilungsmessgerät (10) nach einem der vorstehenden Ansprüche, **gekennzeichnet durch**
eine Linsen-Justagevorrichtung (60) zum Justieren der Linse (18) relativ zum Polarisationstrenner (14).

4. Dynamisches 3D-Lichtstreuungs-Partikelgrößenverteilungsmessgerät (10) nach einem der vorstehenden Ansprüche, **dadurch gekennzeichnet, dass**
(a) die Laserlichtquelle (12) zum Abgeben eines Laserstrahls (34) mit einer Beugungsmaßzahl (M²) von höchstens 1,2 ausgebildet ist und/oder
(b) der Polarisationstrenner (14) ein Polarisationsstrahlteiler ist, der eine optische Achse hat und zwei parallele, orthogonal zueinander polarisierte Laserstrahlen erzeugt.

5. Dynamisches 3D-Lichtstreuungs-Partikelgrößenverteilungsmessgerät (10) nach einem der vorstehenden Ansprüche, **dadurch gekennzeichnet, dass**
(a) die Laserlichtquelle (12) einen Diodenlaser und eine Lichtleitfaser (28) umfasst und
(b) die Lichtleitfaser (28) eine Einmodenfaser ist und ausgebildet ist zum Erzeugen eines Laserstrahls (34) mit einem Gaußprofil mit einer Beugungsmaßzahl (M²) von höchstens 1,2, insbesondere höchstens 1,1.

6. Dynamisches 3D-Lichtstreuungs-Partikelgrößenverteilungsmessgerät (10) nach einem der vorstehenden Ansprüche, **dadurch gekennzeichnet, dass**
(a) eine Lichtleitfaser (28), die einen Lichtleitfaser-Eingang (30), der zum Einkoppeln des Laserstrahls (34) mit der Laserlichtquelle (12) verbunden ist, und einen Lichtleitfaser-Ausgang (32) aufweist,
(b) eine Lichtleitfaser-Justagevorrichtung (62) zum Justieren des Lichtleitfaser-Ausgangs (32) relativ zum Polarisationstrenner (14) aufweist.

7. Dynamisches 3D-Lichtstreuungs-Partikelgrößenverteilungsmessgerät (10) nach einem der vorstehenden Ansprüche, **dadurch gekennzeichnet, dass**
(a) die Probenaufnahme (16) ausgebildet ist zum Aufnehmen einer Probe (44) mit einem Durchmesser von zumindest 7 mm, insbesondere zumindest 9 mm und/oder
(b) in der Probenaufnahme (16) ein Probenbehälter (42), insbesondere eine Küvette mit einem Durchmesser von zumindest 7 mm, insbesondere zumindest 9 mm vorhanden ist.

8. **Verfahren** zum Bestimmen einer Partikelgrößenverteilung einer Probe (44), mit den Schritten
(a) Abgeben eines Laserstrahls (34) mittels eines Lasers (26),
(b) Erzeugen
(i) eines s-Laserstrahls (38), der eine senkrechte Polarisation aufweist,
und
(ii) eines p-Laserstrahls (40), der eine parallele Polarisation aufweist, parallel zum s-Laserstrahl (38) verläuft und vom s-Laserstrahl (38) um einen von null verschiedenen Strahlabstand (d) beabstandet ist, aus dem Laserstrahl mittels eines Polarisationstrenners (14),
(c) Fokussieren des s-Laserstrahls (38) und des p-Laserstrahls (40) auf einen gemeinsamen Fokusbereich (F) innerhalb der Probe (44),
(d) Polarisationsfiltern von unter einem Rückstreuwinkel Θ zurückgestreutem Licht aus dem Fokusbereich (F) mittels eines s-Polarisationsfilters (52), sodass nur s-polarisiertes Licht passiert, sodass ein s-Rückstreu-Lichtstrahls (46) erhalten wird,
(e) Messen einer zeitaufgelösten s-Lichtintensität des s-Rückstreu-Lichtstrahls (46),
(f) Polarisationsfiltern von unter einem Rückstreuwinkel Θ zurückgestreutem Licht aus dem Fokusbereich (F) mittels eines p-Polarisationsfilters (54), sodass nur p-polarisiertes Licht passiert, sodass ein p-Rückstreu-Lichtstrahl (48) erhalten wird,
(g) Messen einer zeitaufgelösten p-Lichtintensität des p-Rückstreu-Lichtstrahls (48) und
(h) Berechnen der Partikelgrößenverteilung aus der zeitaufgelösten p-Lichtintensität und der zeitaufgelösten s-Lichtintensität mittels Kreuzkorrelation der zeitaufgelösten p-Lichtintensität und der zeitaufgelösten s-Lichtintensität.

9. Verfahren nach Anspruch 8, **dadurch gekennzeichnet, dass** der Rückstreuwinkel (Θ) mindestens 165° beträgt.

10. Verfahren nach einem der Ansprüche 8 oder 9, **dadurch gekennzeichnet, dass** der Fokusbereich (F) mindestens 0,3 mm, insbesondere zumindest 0,5 mm, von der Küvettenwand beabstandet ist.

11. Verfahren nach einem der Ansprüche 8 bis 10, **dadurch gekennzeichnet, dass** die Probe (44) in einer Küvette mit einem Durchmesser von zumindest 0,5 mm enthalten ist.

12. Verfahren nach einem der Ansprüche 8 bis 1011, **dadurch gekennzeichnet, dass** der Fokusbereich (F) höchstens 2 mm, insbesondere höchstens 1 mm, von einem Einfallpunkt, in dem der Laserstrahl in den Probenbehälter (42) einfällt, beabstandet ist.

## Claims

1. A dynamic 3D light scattering particle size distribution measurement device (10) with
(a) a laser light source (12) for emitting a laser beam (34),
(b) a polarization splitter (14) for generating
(i) an s laser beam (38) with perpendicular polarization and
(ii) a p laser beam (40) with parallel polarization that travels parallel to the s laser beam and is spaced apart from the s laser beam (38) by a beam spacing (d) other than zero,
(c) a sample holder (16) for holding a sample (44) whose particle size distribution is to be measured,
(d) a lens (18) that serves to focus to the s laser beam (38) and the p laser beam (40) onto a common focus area (F) inside the sample holder (16), and
(e) an evaluation unit (24) designed to automatically calculate the particle size distribution
**characterized by**
(f) an s light intensity detector (22) for measuring a time-resolved s light intensity, wherein the s light intensity detector (22)
(i) is arranged to detect an s backscattered light beam (46) from backscattered light of the s laser beam (38) from the focus area (F),
(ii) comprises an s-polarisation filter (52) that allows perpendicularly polarized light to pass, resulting in s measuring light, and
(iii) comprises a light detector for the time-resolved intensity measurement of the s measuring light,
(g) a p light intensity detector (20) for measuring a time-resolved p light intensity, wherein p light intensity detector (20)
(i) is arranged to detect a p backscattered light beam (48) from backscattered light of the p laser beam (40) from the focus area (F),
(ii) comprises a p polarization filter (54) that allows parallel polarized light to pass, and
(iii) comprises a light detector for the time-resolved intensity measurement of the p measuring light, and
(h) wherein the evaluation unit (24) designed to automatically calculate the particle size distribution from the time-resolved p light intensity and the time-resolved s light intensity through cross-correlation.

2. The dynamic 3D light scattering particle size distribution measurement device (10) according to claim 1, **characterized in that**
the s light intensity detector (22) and the p light intensity detector (20) are arranged in such a way that the backscattered light beams travel from the focus area (F) through the lens (18) to the light intensity detectors.

3. The dynamic 3D light scattering particle size distribution measurement device (10) according to one of the preceding claims, **characterized by** a lens adjustment device (60) for adjusting the lens (18) relative to the polarization splitter (14).

4. The dynamic 3D light scattering particle size distribution measurement device (10) according to one of the preceding claims, **characterized in that**
(a) the laser light source (12) is designed to emit a laser beam (34) with a beam propagation ratio (M²) of at most 1.2 and/or
(b) the polarization splitter (14) is a polarization beam splitter that has an optical axis and generates two parallel laser beams that are orthogonally polarized to each other.

5. The dynamic 3D light scattering particle size distribution measurement device (10) according to one of the preceding claims, **characterized in that**
(a) the laser light source (12) comprises a diode laser and an optical fiber (28)
and
(b) the optical fiber (28) is a single-mode fiber and is designed to generate a laser beam (34) with a Gaussian profile with a beam propagation ratio (M²) of at most 1.2, particularly at most 1.1.

6. The dynamic 3D light scattering particle size distribution measurement device (10) according to one of the preceding claims, **characterized in that**
(a) an optical fiber (28) that comprises an optical fiber input (30), which is connected to the laser light source for coupling in the laser beam (34), and an optical fiber output (32),
(b) comprises an optical fiber adjustment device (62) for adjusting the optical fiber output (32) relative to the polarization splitter (14).

7. The dynamic 3D light scattering particle size distribution measurement device (10) according to one of the preceding claims, **characterized in that**
(a) the sample holder (16) is designed to hold a sample (44) with a diameter of at least 7 mm, particularly at least 9 mm and/or
(b) a sample container (42), especially a cuvette with a diameter of at least 7 mm, particularly at least 9 mm, is provided in the sample holder (16).

8. A method for determining a particle size distribution of a sample (44) comprising the steps
(a) emitting a laser beam (34) by means of a laser (26),
(b) generating
(i) an s laser beam (38) with perpendicular polarization and
(ii) a p laser beam (40) with parallel polarization, which travels parallel to the s laser beam (38) and is spaced apart from the s laser beam (38) by a beam spacing (d) other than zero, from the laser beam by means of a polarization splitter (14),
(c) focussing the s laser beam (38) and the p laser beam (40) on a collective focus area (F) inside the sample (44),
(d) polarization filtering of light backscattered at a backscatter angle Θ from the focus area (F) by means of an s polarization filter (52) so that only s polarized light passes, resulting in an s backscattered light beam (46),
(e) measuring a time-resolved s light intensity of the s backscattered light beam (46),
(f) polarization filtering of backscattered light from the focus area (F) at a backscatter angle Θ by means of a p polarization filter (54), so that only p polarized light passes, resulting in a p backscattered light beam (48),
(g) measuring a time-resolved p light intensity of the p backscattered light beam (48), and
(h) calculating the particle size distribution from the time-resolved p light intensity and the time-resolved s light intensity through cross-correlation of the time-resolved p light intensity and the time-resolved s light intensity.

9. The method according to claim 8, **characterized in that** the backscatter angle (Θ) is at least 165°.

10. The method according to one of the claims 8 or 9, **characterized in that** the focus area (F) is spaced apart from the cuvette wall by at least 0.3 mm, especially at least 0.5 mm.

11. The method according to one of the claims 8 to 10, **characterized in that** the sample (44) is contained in a cuvette with a diameter of at least 0.5 mm.

12. The method according to one of the claims 8 to 1011, **characterized in that** the focus area (F) is spaced apart from a point of incidence at which the laser beam enters the sample container (42) by at most 2 mm, especially at most 1 mm.

## Revendications

1. Appareil (10) de mesure dynamique de la distribution granulométrique par diffusion de lumière en 3D, comprenant
(a) une source de lumière laser (12) destinée à émettre un faisceau laser (34),
(b) un séparateur de polarisation (14) destiné à générer
(i) un faisceau laser s (38) présentant une polarisation perpendiculaire, et
(ii) un faisceau laser p (40) présentant une polarisation parallèle, s'étendant parallèlement au faisceau laser s (38) et espacé du faisceau laser s (38) d'une distance de faisceau (d) non nulle,
(c) un porte-échantillon (16) destiné à recevoir un échantillon (44) dont la distribution granulométrique doit être mesurée,
(d) une lentille (18) servant à focaliser le faisceau laser s (38) et le faisceau laser p (40) sur une zone de focalisation commune (F) à l'intérieur du porte-échantillon (16), et
(e) une unité d'évaluation (24) conçue pour calculer automatiquement la distribution granulométrique,
**caractérisé par**
(f) un détecteur d'intensité lumineuse s (22) destiné à mesurer une intensité lumineuse s résolue en temps, qui
(i) est agencé pour détecter un faisceau de lumière de rétrodiffusion s (46) constitué de lumière rétrodiffusée du faisceau laser s (38) issu de la zone de focalisation (F),
(ii) comporte un filtre de polarisation s (52) qui laisse passer la lumière polarisée perpendiculairement, de sorte qu'il en résulte une lumière de mesure s, et
(iii) comporte un détecteur de lumière pour la mesure d'intensité résolue en temps de la lumière de mesure s, et
(g) un détecteur d'intensité lumineuse p (20) destiné à mesurer une intensité lumineuse p résolue en temps, qui
(i) est agencé pour détecter un faisceau de lumière de rétrodiffusion p (48) constitué de lumière rétrodiffusée du faisceau laser p (40) issu de la zone de focalisation (F),
(ii) comporte un filtre de polarisation p (54) qui laisse passer la lumière polarisée parallèlement, et
(iii) comporte un détecteur de lumière pour la mesure d'intensité résolue en temps de la lumière de mesure p,
(h) l'unité d'évaluation (24) étant conçue pour calculer automatiquement la distribution granulométrique par corrélation croisée entre l'intensité lumineuse p résolue en temps et l'intensité lumineuse s résolue en temps.

2. Appareil (10) de mesure dynamique de la distribution granulométrique par diffusion de lumière en 3D selon la revendication 1, **caractérisé en ce que**
le détecteur d'intensité lumineuse s (22) et le détecteur d'intensité lumineuse p (20) sont disposés de telle sorte que les faisceaux de lumière de rétrodiffusion issus de la zone de focalisation (F) traversent la lentille (18) pour atteindre les détecteurs d'intensité lumineuse.

3. Appareil (10) de mesure dynamique de la distribution granulométrique par diffusion de lumière en 3D selon l'une des revendications précédentes, **caractérisé par**
un dispositif d'ajustement de lentille (60) destiné à ajuster la lentille (18) par rapport au séparateur de polarisation (14).

4. Appareil (10) de mesure dynamique de la distribution granulométrique par diffusion de lumière en 3D selon l'une des revendications précédentes, **caractérisé en ce que**
(a) la source de lumière laser (12) est conçue pour émettre un faisceau laser (34) ayant un paramètre de diffraction (M²) de 1,2 au maximum, et/ou
(b) le séparateur de polarisation (14) est un séparateur de faisceau de polarisation qui possède un axe optique et génère deux faisceaux laser parallèles, polarisés orthogonalement l'un par rapport à l'autre.

5. Appareil (10) de mesure dynamique de la distribution granulométrique par diffusion de lumière en 3D selon l'une des revendications précédentes, **caractérisé en ce que**
(a) la source de lumière laser (12) comprend un laser à diode et une fibre optique (28), et
(b) la fibre optique (28) est une fibre monomode et est conçue pour générer un faisceau laser (34) présentant un profil gaussien avec un paramètre de diffraction (M²) de 1,2 au maximum, en particulier de 1,1 au maximum.

6. Appareil (10) de mesure dynamique de la distribution granulométrique par diffusion de lumière en 3D selon l'une des revendications précédentes, **caractérisé en ce qu'**il est prévu
(a) une fibre optique (28) comprenant une entrée de fibre optique (30), reliée à la source de lumière laser (12) pour injecter le faisceau laser (34), et une sortie de fibre optique (32),
(b) un dispositif d'ajustement de fibre optique (62) destiné à ajuster la sortie de fibre optique (32) par rapport au séparateur de polarisation (14).

7. Appareil (10) de mesure dynamique de la distribution granulométrique par diffusion de lumière en 3D selon l'une des revendications précédentes, **caractérisé en ce que**
(a) le porte-échantillon (16) est conçu pour recevoir un échantillon (44) d'un diamètre de 7 mm au minimum, en particulier de 9 mm au minimum, et/ou
(b) un récipient à échantillon (42), en particulier une cuvette d'un diamètre de 7 mm au minimum, en particulier de 9 mm au minimum, est présent dans le porte-échantillon (16).

8. Procédé de détermination de la distribution granulométrique d'un échantillon (44), comprenant les étapes consistant à :
(a) émettre un faisceau laser (34) au moyen d'un laser (26),
(b) générer
(i) un faisceau laser s (38) présentant une polarisation perpendiculaire, et
(ii) un faisceau laser p (40), présentant une polarisation parallèle, s'étendant parallèlement au faisceau laser s (38) et espacé du faisceau laser s (38) d'une distance de faisceau (d) non nulle, à partir du faisceau laser au moyen d'un séparateur de polarisation (14),
(c) focaliser le faisceau laser s (38) et le faisceau laser p (40) sur une zone de focalisation commune (F) à l'intérieur de l'échantillon (44),
(d) filtrer par polarisation la lumière rétrodiffusée selon un angle de rétrodiffusion Θ à partir de la zone de focalisation (F) à l'aide d'un filtre de polarisation s (52), de sorte que seule la lumière polarisée s passe, afin d'obtenir un faisceau de lumière de rétrodiffusion s (46),
(e) mesurer une intensité lumineuse s résolue en temps du faisceau de lumière de rétrodiffusion s (46),
(f) filtrer par polarisation la lumière rétrodiffusée selon un angle de rétrodiffusion Θ à partir de la zone de focalisation (F) à l'aide d'un filtre de polarisation p (54), de sorte que seule la lumière polarisée p passe, afin d'obtenir un faisceau de lumière de rétrodiffusion p (48),
(g) mesurer une intensité lumineuse p résolue en temps du faisceau de lumière de rétrodiffusion p (48), et
(h) calculer la distribution granulométrique à partir de l'intensité lumineuse p résolue en temps et de l'intensité lumineuse s résolue en temps par corrélation croisée entre l'intensité lumineuse p résolue en temps et l'intensité lumineuse s résolue en temps.

9. Procédé selon la revendication 8, **caractérisé en ce que** l'angle de rétrodiffusion (Θ) est d'au moins 165°.

10. Procédé selon l'une des revendications 8 ou 9, **caractérisé en ce que** la zone de focalisation (F) est espacée de 0,3 mm au minimum, en particulier de 0,5 mm au minimum, de la paroi de la cuvette.

11. Procédé selon l'une des revendications 8 à 10, **caractérisé en ce que** l'échantillon (44) est contenu dans une cuvette d'un diamètre de 0,5 mm au minimum.

12. Procédé selon l'une des revendications 8 à 11, **caractérisé en ce que** la zone de focalisation (F) est espacée de 2 mm au maximum, en particulier de 1 mm au maximum, d'un point d'incidence où le faisceau laser pénètre dans le récipient à échantillon (42).
